# EUROPEAN PATENT APPLICATION

(11) **EP 3 968 680 A1**
(43) Date of publication of application: **16.03.2022**
(21) Application number: 21196527.2
(22) Date of filing: 14.09.2021
(51) Int. Cl.: H04W 12/069, H04W 12/082, H04W 12/77, G06Q 50/12

(54) **RESET BUTTON FOR SELECTIVE SECURE ACCESS TO A NETWORK**

(30) Priority: 14.09.2020 US 202063078000 P; 20.01.2021 US 202163139364 P
(71) Applicant: ARRIS Enterprises LLC, Suwanee, GA 30024 (US)
(72) Inventor: MOLINARI, Marcelo, San Jose, 95134 (US); COPPINI, Andrea, 41410 Sevilla (ES); THONE, Rodolfo, San Jose, 95129 (US)
(74) Representative: Openshaw & Co.

(57) **Abstract**

An electronic device that selectively enables secure access to a network is described. During operation, the electronic device may receive an access request. For example, the access request may correspond to activation of or a change in a state of: a physical user-interface device in the electronic device; or a virtual icon displayed in a user interface on a display. In response to receiving the access request, the electronic device may display, on the display, information that specifies an identifier of the network (such as a service set identifier or SSID) and a passphrase (such as a dynamic pre-share key or DPSK) associated with a location of the electronic device (such as a hotel room), where the passphrase enables secure access to the network that is proximate to the location. In some embodiments, the information may include a two-dimensional (2D) quick response (QR) code or another type of graphical pattern.

## Description

### FIELD

The described embodiments relate to techniques for selectively enabling secure access to a network in response to activation of a reset button.

### BACKGROUND

Many electronic devices are capable of wirelessly communicating with other electronic devices. In particular, these electronic devices can include a networking subsystem that implements a network interface for: a cellular network (UMTS, LTE, etc.), a wireless local area network (e.g., a wireless network such as described in the Institute of Electrical and Electronics Engineers (IEEE) 802.11 standard or Bluetooth from the Bluetooth Special Interest Group of Kirkland, Washington), and/or another type of wireless network. For example, many electronic devices communicate with each other via wireless local area networks (WLANs) using an IEEE 802.11-compatible communication protocol (which is sometimes collectively referred to as 'Wi-Fi'). In a typical deployment, a Wi-Fi-based WLAN includes one or more access points (or basic service sets or BSSs) that communicate wirelessly with each other and with other electronic devices using Wi-Fi, and that provide access to another network (such as the Internet) via IEEE 802.3 (which is sometimes referred to as 'Ethernet').

One challenge associated with Wi-Fi is how to allow electronic devices to establish connections to personal area networks (PANs) that are implemented in a WLAN. Notably, there may be multiple overlapping PANs in the WLAN, which means that electronic devices outside of a given PAN may be able to access content associated with the other PANs (and vice versa).

In principle, this problem can be addressed by establishing secure PANs. Notably, a given electronic device may establish a secure connection in a given PAN, so that its communications (and, thus, the associated content) cannot be accessed by other PANs in the WLAN.

However, this approach raises other challenges, such as how to distribute and use cryptographic information (such as passphrases, which are sometimes referred to as dynamic pre-shared keys or DPSKs) to the given electronic device in the given PAN, so that the secure connection can be established. For example, is some existing approaches, a given electronic device in a PAN has a separate passphrase that is associated with the given electronic device, which can make onboarding the electronic devices cumbersome and time-consuming, or may require a complicated enrollment process for the electronic devices in the given PAN. Moreover, in these approaches, management of the passphrases can be complicated.

### SUMMARY

An electronic device that selectively enables secure access to a network is described. This electronic device may include: a display; a processor; and a memory that stores program instructions, where, when executed by the processor, the program instructions cause the electronic device to perform operations. Notably, during operation, the electronic device receives an access request. In response to receiving the access request, the electronic device displays, on the display, information that specifies an identifier of the network and a passphrase associated with a location of the electronic device, where the passphrase enables secure access to the network that is proximate to the location.

Note that the passphrase may include a DPSK.

Moreover, the access request may correspond to activation of or a change in a state of: a physical user-interface device in the electronic device; or a virtual icon displayed in a user interface on the display.

Furthermore, in response to the access request, the electronic device may select the passphrase from a set of predetermined passphrases. Thus, the electronic device may be preconfigured with the passphrase.

In some embodiments, the electronic device may include an interface circuit that communicates with a second electronic device (such as an access point in the network, a switch in the network, a computer network device, a controller, an authentication, authorization, and accounting or AAA server, etc.). After selecting the passphrase, the electronic device may provide, addressed to the second electronic device, an indication that the passphrase has been activated or is in use.

Alternatively, in response to the access request, the electronic device may: provide a request, addressed to the second electronic device, for the passphrase, where the request includes access credentials for the network; and receive, associated with the second electronic device, the passphrase. For example, the request may include a remote authentication dial-in user service (RADIUS) access request, and the response may include a RADIUS access acceptance message. Note that the passphrase may be received via a pre-existing secure connection between the electronic device and the second electronic device. In some embodiments, the electronic device receives, associated with the second electronic device, the identifier.

Additionally, after the access request is received, the electronic device may de-activate a previous passphrase associated with the location. For example, the electronic device may provide, addressed to the second electronic device, an instruction to de-activate the previous passphrase. The previous passphrase may be de-activated when the electronic device receives an access code, such as a PIN code. Alternatively, the previous passphrase may expire after a time interval has elapsed.

Note that the network may include a WLAN. Moreover, the identifier may include a service set identifier (SSID) of the network.

In some embodiments, the information is displayed until a subsequent access request is received.

Moreover, the information may include a two-dimensional (2D) quick response (QR) code, a barcode, a matrix barcode or another type of graphical pattern.

Furthermore, the passphrase may be unique to a third electronic device associated with an individual or a group of third electronic devices that are associated with at least the individual and that share the passphrase (thus, in some embodiments, the passphrase may include a group DPSK).

Additionally, the location may be associated with: a room, a building, a communication port, a facility associated with the organization (such as a hotel or an education institution), etc.

In some embodiments, the network may include a virtual network associated with the location (such as a virtual network for a PAN), and the displayed information allows the third electronic device to establish secure communication with the virtual network. This secure communication may be independent of traffic associated with other users of the network. For example, the second electronic device may bridge traffic between the third electronic device and the group of electronic devices in the virtual network in the network, where the traffic in the virtual network is independent of other traffic associated with one or more different virtual networks in the network. Note that the virtual network may include: a virtual local area network (VLAN) or a virtual extensible local area network (VXLAN).

Note that the passphrase may be independent of an identifier associated with the third electronic device, such as the media access control (MAC) address of the third electronic device. More generally, the passphrase may be independent of the third electronic device or hardware in the third electronic device.

Another embodiment provides the second electronic device that performs counterpart operations to at least some of the aforementioned operations of the electronic device.

Another embodiment provides a system that includes the electronic device.

Another embodiment provides the third electronic device.

Another embodiment provides a computer-readable storage medium with program instructions for use with one of the aforementioned components. When executed by the component, the program instructions cause the component to perform at least some of the aforementioned operations in one or more of the preceding embodiments.

Another embodiment provides a method, which may be performed by one of the aforementioned components. This method includes at least some of the aforementioned operations in one or more of the preceding embodiments.

This Summary is provided for purposes of illustrating some exemplary embodiments, so as to provide a basic understanding of some aspects of the subject matter described herein. Accordingly, it will be appreciated that the above-described features are examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE FIGURES

FIG. 1 is a block diagram illustrating an example of communication among electronic devices in accordance with an embodiment of the present disclosure.
FIG. 2 is a flow diagram illustrating an example of a method for selectively enabling secure access to a network using an electronic device in FIG. 1 in accordance with an embodiment of the present disclosure.
FIG. 3 is a drawing illustrating an example of communication among the electronic devices in FIG. 1 in accordance with an embodiment of the present disclosure.
FIG. 4 is a drawing illustrating an example of an electronic device for selectively enabling secure access with a network in accordance with an embodiment of the present disclosure.
FIG. 5 is a block diagram illustrating an example of an electronic device in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

An electronic device that selectively enables secure access to a network (such as a WLAN) is described. During operation, the electronic device may receive an access request. For example, the access request may correspond to activation of or a change in a state of: a physical user-interface device in the electronic device; or a virtual icon displayed in a user interface on a display. In response to receiving the access request, the electronic device may display, on the display, information that specifies an identifier of the network (such as an SSID) and a passphrase (such as a DPSK) associated with a location of the electronic device (such as a hotel room), where the passphrase enables secure access to the network that is proximate to the location. In some embodiments, the information may include a 2D QR code, a barcode, a matrix barcode or another type of graphical pattern.

By selectively displaying the information, these communication techniques may selectively enable secure communication with the network, e.g., by another electronic device. Notably, the communication techniques may allow secure communication with the other electronic device based at least in part on a passphrase. This may allow dynamic secure access to the network, such as access at one or more locations and/or at different times. Consequently, the communication techniques may make the onboarding simpler and less time-consuming, and may eliminate the need for a complicated enrollment process for the other electronic device or cumbersome management of multiple passphrases. Therefore, the communication techniques may enhance the user experience when communicating in the network.

In the discussion that follows, electronic devices or components in a system communicate packets in accordance with a wireless communication protocol, such as: a wireless communication protocol that is compatible with an IEEE 802.11 standard (which is sometimes referred to as 'Wi-Fi^{®},' from the Wi-Fi Alliance of Austin, Texas), Bluetooth, a cellular-telephone network or data network communication protocol (such as a third generation or 3G communication protocol, a fourth generation or 4G communication protocol, e.g., Long Term Evolution or LTE (from the 3rd Generation Partnership Project of Sophia Antipolis, Valbonne, France), LTE Advanced or LTE-A, a fifth generation or 5G communication protocol, or other present or future developed advanced cellular communication protocol), and/or another type of wireless interface (such as another wireless-local-area-network interface). For example, an IEEE 802.11 standard may include one or more of: IEEE 802.11a, IEEE 802.11b, IEEE 802.11g, IEEE 802.11-2007, IEEE 802.11n, IEEE 802.11-2012, IEEE 802.11-2016, IEEE 802.11ac, IEEE 802.11ax, IEEE 802.11ba, IEEE 802.11be, or other present or future developed IEEE 802.11 technologies. Moreover, an access point, a radio node, a base station or a switch in the wireless network may communicate with a local or remotely located computer (such as a controller) using a wired communication protocol, such as a wired communication protocol that is compatible with an IEEE 802.3 standard (which is sometimes referred to as 'Ethernet'), e.g., an Ethernet II standard. However, a wide variety of communication protocols may be used in the system, including wired and/or wireless communication. In the discussion that follows, Wi-Fi, LTE and Ethernet are used as illustrative examples.

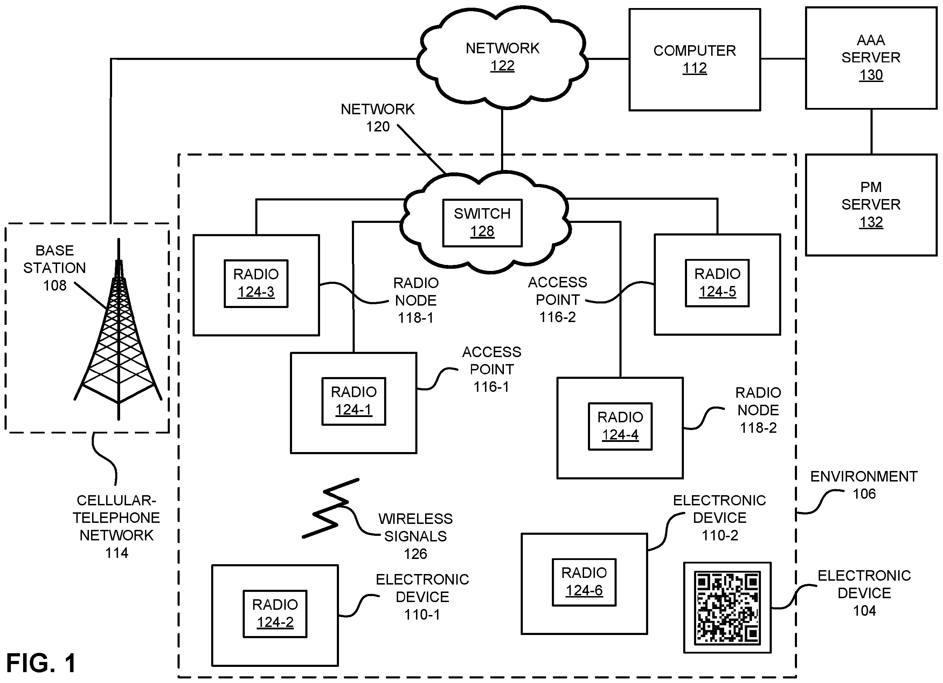

We now describe some embodiments of the communication techniques. FIG. 1 presents a block diagram illustrating an example of communication in an environment 106 with one or more electronic devices 110 (such as cellular telephones, portable electronic devices, stations or clients, another type of electronic device, etc.) via a cellular-telephone network 114 (which may include a base station 108), one or more access points 116 (which may communicate using Wi-Fi) in a WLAN and/or one or more radio nodes 118 (which may communicate using LTE) in a small-scale network (such as a small cell). For example, the one or more radio nodes 118 may include: an Evolved Node B (eNodeB), a Universal Mobile Telecommunications System (UMTS) NodeB and radio network controller (RNC), a New Radio (NR) gNB or gNodeB (which communicates with a network with a cellular-telephone communication protocol that is other than LTE), etc. In the discussion that follows, an access point, a radio node or a base station are sometimes referred to generically as a 'communication device.' Moreover, as noted previously, one or more base stations (such as base station 108), access points 116, and/or radio nodes 118 may be included in one or more wireless networks, such as: a WLAN, a small cell, and/or a cellular-telephone network. In some embodiments, access points 116 may include a physical access point and/or a virtual access point that is implemented in software in an environment of an electronic device or a computer.

Note that access points 116 and/or radio nodes 118 may communicate with each other and/or computer 112 (which may be a cloud-based controller that manages and/or configures access points 116, radio nodes 118 and/or switch 128, or that provides cloud-based storage and/or analytical services) using a wired communication protocol (such as Ethernet) via network 120 and/or 122. Note that networks 120 and 122 may be the same or different networks. For example, networks 120 and/or 122 may a LAN, an intra-net or the Internet. In some embodiments, network 120 may include one or more routers and/or switches (such as switch 128).

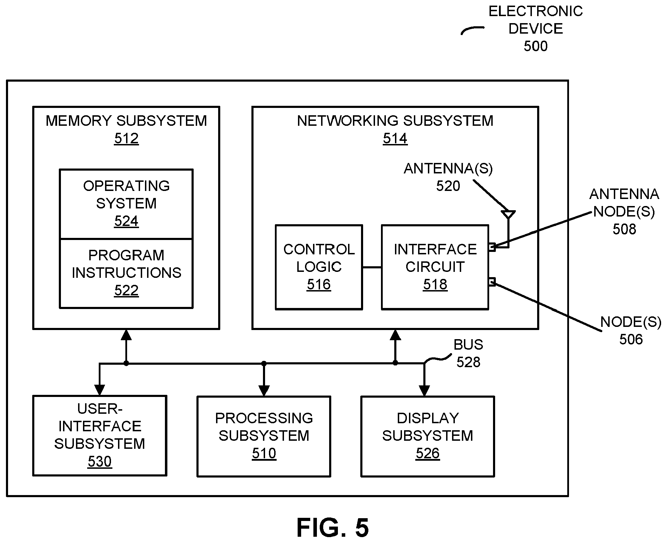

As described further below with reference to FIG. 5, electronic devices 110, computer 112, access points 116, radio nodes 118 and switch 128 may include subsystems, such as a networking subsystem, a memory subsystem and a processor subsystem. In addition, electronic devices 110, access points 116 and radio nodes 118 may include radios 124 in the networking subsystems. More generally, electronic devices 110, access points 116 and radio nodes 118 can include (or can be included within) any electronic devices with the networking subsystems that enable electronic devices 110, access points 116 and radio nodes 118 to wirelessly communicate with one or more other electronic devices. This wireless communication can comprise transmitting access on wireless channels to enable electronic devices to make initial contact with or detect each other, followed by exchanging subsequent data/management frames (such as connection requests and responses) to establish a connection, configure security options, transmit and receive frames or packets via the connection, etc.

During the communication in FIG. 1, access points 116 and/or radio nodes 118 and electronic devices 110 may wired or wirelessly communicate while: transmitting access requests and receiving access responses on wireless channels, detecting one another by scanning wireless channels, establishing connections (for example, by transmitting connection requests and receiving connection responses), and/or transmitting and receiving frames or packets (which may include information as payloads).

As can be seen in FIG. 1, wireless signals 126 (represented by a jagged line) may be transmitted by radios 124 in, e.g., access points 116 and/or radio nodes 118 and electronic devices 110. For example, radio 124-1 in access point 116-1 may transmit information (such as one or more packets or frames) using wireless signals 126. These wireless signals are received by radios 124 in one or more other electronic devices (such as radio 124-2 in electronic device 110-1). This may allow access point 116-1 to communicate information to other access points 116 and/or electronic device 110-1. Note that wireless signals 126 may convey one or more packets or frames.

In the described embodiments, processing a packet or a frame in access points 116 and/or radio nodes 118 and electronic devices 110 may include: receiving the wireless signals with the packet or the frame; decoding/extracting the packet or the frame from the received wireless signals to acquire the packet or the frame; and processing the packet or the frame to determine information contained in the payload of the packet or the frame.

Note that the wireless communication in FIG. 1 may be characterized by a variety of performance metrics, such as: a data rate for successful communication (which is sometimes referred to as 'throughput'), an error rate (such as a retry or resend rate), a mean-square error of equalized signals relative to an equalization target, intersymbol interference, multipath interference, a signal-to-noise ratio, a width of an eye pattern, a ratio of number of bytes successfully communicated during a time interval (such as 1-10 s) to an estimated maximum number of bytes that can be communicated in the time interval (the latter of which is sometimes referred to as the 'capacity' of a communication channel or link), and/or a ratio of an actual data rate to an estimated data rate (which is sometimes referred to as 'utilization'). While instances of radios 124 are shown in components in FIG. 1, one or more of these instances may be different from the other instances of radios 124.

In some embodiments, wireless communication between components in FIG. 1 uses one or more bands of frequencies, such as: 900 MHz, 2.4 GHz, 5 GHz, 6 GHz, 60 GHz, the Citizens Broadband Radio Spectrum or CBRS (e.g., a frequency band near 3.5 GHz), and/or a band of frequencies used by LTE or another cellular-telephone communication protocol or a data communication protocol. Note that the communication between electronic devices may use multi-user transmission (such as orthogonal frequency division multiple access or OFDMA).

Although we describe the network environment shown in FIG. 1 as an example, in alternative embodiments, different numbers or types of electronic devices may be present. For example, some embodiments comprise more or fewer electronic devices. As another example, in another embodiment, different electronic devices are transmitting and/or receiving packets or frames.

As discussed previously, it can be difficult to establish secure communication, e.g., in PANs. For example, when each of electronic devices 110 has a separate passphrase, complicated and time-consuming onboarding process and passphrase management may be needed. Moreover, it can be difficult to adapt or change the access criteria for one or more of the electronic devices 110.

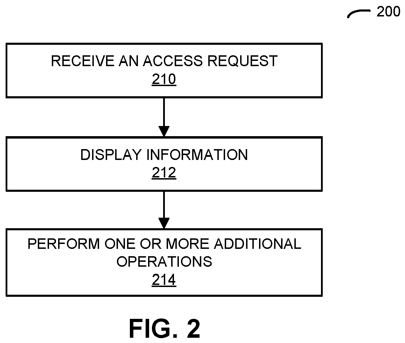

As described further below with reference to FIGs. 2-4, in order to address these problems, an electronic device 104 may be included in environment 106, such as in a hotel room. For example, electronic device 104 may be mounted on a wall in the hotel room, behind a television, on an access point (such as access point 116-1), etc. This electronic device may selectively enable secure access to a network (such as a WLAN) by providing a passphrase (such as a DPSK) or information that specifies the passphrase when an individual activates or changes a state of a physical user-interface device (e.g., in electronic device 104, such as a button or a switch), or when the individual activates or changes a state of a virtual icon in a user interface on a touch-sensitive display (e.g., in electronic device 104 or that is located in proximity, such as a television in a hotel room). Note that activating or changing the state of the user-interface device or the virtual icon is sometimes referred to as providing an 'access request.'

In response to receiving the access request, electronic device 104 may display on a display (e.g., in electronic device 104 or that is located in proximity), information that specifies an identifier of the network (such as an SSID) and the passphrase associated with a location of electronic device 104, where the passphrase enables secure access to the network that is proximate to the location. For example, the information may include a 2D QR code, a barcode, a matrix barcode or another type of graphical pattern. More generally, electronic device 104 may output or provide the information, such as alphanumeric values that are displayed on the display, sound that is output from a speaker, etc. Note that the information may be provided (e.g., displayed) until a subsequent instance of an access request is received. In some embodiments, the location may be associated with or may include: a room, a building, a communication port (such as a particular Ethernet port), a facility associated with the organization (such as a hotel or an education institution), etc. In general, in the present discussion a 'location' may not be restricted to a physical location, but may be abstracted to include an object or entity associated with a physical location, such as a particular room or building.

Note that, in response to the access request, electronic device 104 may select the passphrase from a set of predetermined passphrases that are stored in memory in electronic device 104. Thus, electronic device 104 may be preconfigured with the passphrase. In some embodiments, electronic device 104 may be capable of wired or wireless communication, e.g., with a second electronic device, such as: one of access points 116 (such as access point 116-1), one of radio nodes 118 (such as radio node 118-1), switch 128, computer 112 or AAA server 130. In these embodiments, after selecting the passphrase, electronic device 104 may provide, to the second electronic device, an indication that the passphrase has been activated or is in use.

Alternatively, in response to the access request, electronic device 104 may: provide a request, to the second electronic device, for the passphrase, where the request includes access credentials for the network; and receive, from the second electronic device, the passphrase. For example, the request may include a RADIUS access request, and the response may include a RADIUS access acceptance message. Alternatively, a DIAMETER protocol may be used. Note that the passphrase may be received via a pre-existing secure connection between electronic device 104 and the second electronic device. In some embodiments, electronic device 104 receives, from the second electronic device, the identifier. Furthermore, in some embodiments, the request may use a representational state transfer (REST) application programming interface (API) call and/or the request and the response may be encrypted.

Additionally, after the access request is received, electronic device 104 may de-activate a previous passphrase associated with the location. For example, electronic device 104 may provide, to the second electronic device, an instruction to de-activate the previous passphrase. In some embodiments, the previous passphrase may be de-activated when electronic device 104 receives an access code (e.g., via a user interface), such as a PIN code. Alternatively, the previous passphrase may expire after a time interval has elapsed, such as 1 hr., a day, a week, etc.

Note that the individual may enter or provide the passphrase to one of electronic devices 110 (such as electronic device 110-1). For example, the individual may capture an image of a QR code the specifies the identifier and the passphrase using a camera or an image sensor in electronic device 110-1. Alternatively, the individual may provide the passphrase and the identifier to electronic device 110-1, e.g., using a keyboard, a touch-sensitive display, a voice-machine interface, etc. Then, electronic device 110-1 may analyze one or more images (e.g., using an image-processing or analysis technique, a pretrained neural network, etc.) to extract the identifier and the passphrase. In some embodiments, electronic device 104 provides the passphrase to electronic device 110-1 via another communication channel or link, such as using an email, an SMS message, etc. For example, the email or the SMS message may include a link, which, when activated, may access a portal (such as a web page or website via networks 120 and 122) where the passphrase may be accessed.

As described further below, electronic device 110-1 may use the passphrase to establish secure communication with a network specified by the identifier. In some embodiments, the passphrase may be unique to electronic device 110-1 (which may be associated with the individual, who may be a guest in a hotel) or a group of electronic devices that are associated with at least the individual (such as the individual's family) and that share the passphrase (thus, in some embodiments, the passphrase may include a group DPSK).

In some embodiments, the network may include a virtual network associated with the location (such as a virtual network for a PAN), and the displayed information allows the electronic device 110-1 to establish secure communication with the virtual network. This secure communication may be independent of traffic associated with other users of the network. For example, the second electronic device may bridge traffic between electronic device 110-1 and the group of electronic devices in the virtual network in the network, where the traffic in the virtual network is independent of other traffic associated with one or more different virtual networks in the network. Note that the virtual network may include: a VLAN or a VXLAN.

Moreover, the passphrase may be independent of an identifier associated with electronic device 110-1, such as the MAC address of electronic device 110-1. More generally, the passphrase may be independent of electronic device 110-1 or hardware in electronic device 110-1.

As described previously, the passphrase may allow electronic device 110-1 to establish secure communication with the network, e.g., via access point 116-1, radio node 118-1 or switch 128. In the discussion that follows, access point 116-1 is used to illustrate the communication techniques.

During operation, an electronic device 110-1 may discover and associate with access point 116-1 (and, thus, with a network, such as a WLAN and/or network 120, provided by access point 116-1). For example, electronic device 110-1 may provide an authentication request to access point 116-1. Then, access point 116-1 may provide a user-equipment context request to computer 112. As described further below, computer 112 may subsequently provide a user-equipment context response to access point 116-1, which may confirm that there is not an existing context or association for electronic device 110-1 in the WLAN.

Moreover, access point 116-1 may provide an authentication response to electronic device 110-1. Next, electronic device 110-1 may provide an association request to access point 116-1, which may respond by providing an association response to electronic device 110-1. Note that, at this point there is a connection between electronic device 110-1 and access point 116-1, but the communication is not encrypted. Furthermore, computer 112 may provide the user-equipment context response to access point 116-1, such as a negative acknowledgment or NACK.

After associating with electronic device 110-1, access point 116-1 may provide a first message in a four-way handshake with electronic device 110-1. This first message may include a random number associated with access point 116-1 (which is sometimes referred to as an 'ANonce'). In response, electronic device 110-1 may construct, derive or generate a pairwise transient key (PTK). For example, the PTK may be constructed or generated using a cryptographic calculation (such as a pseudo-random function) and a pre-shared key (such as a passphrase, e.g., a DPSK or another type of digital certificate) the ANonce, a second random number associated with electronic device 110-1 (which is sometimes referred to as an 'SNonce'), an identifier of access point 116-1 (such as a MAC address of access point 116-1), and/or an identifier of electronic device 110-1 (such as the MAC address of electronic device 110-1). In addition to being provided or specified by electronic device 104, the passphrase may be stored in memory that is accessible by AAA server 130.

Furthermore, electronic device 110-1 may provide a second message in the four-way handshake to access point 116-1. The second message may include the SNonce and a message integrity check (MIC) to access point 116-1. In some embodiments, the second message includes: the inputs to the cryptographic calculation and an output of the cryptographic calculation.

Additionally, access point 116-1 may provide an access request to computer 112 (such as a RADIUS access request), and computer 112 may provide the access request to AAA server 130 (such as a RADIUS access request). In some embodiments, the access request includes passphrase parameters associated with the individual. (Therefore, in some embodiments, the passphrase parameters may be included in a RADIUS attribute, such as a VSA, e.g., VSA 153.) The passphrase parameters may include: the inputs to the cryptographic calculation and an output of the cryptographic calculation. For example, the passphrase parameters may include: the ANonce, the SNonce, the MIC, the MAC address of electronic device 110-1, and/or the MAC address of access point 116-1. In addition, the access request may include other information, such as: a cluster name, a zone name, the SSID of the WLAN, a basic service set identifier (BSSID) of access point 116-1, and a username of the individual.

Based at least in part on the passphrase parameters, AAA server 130 may perform authentication and authorization, including comparing cryptographic information specified by the passphrase with stored information (such as the DPSK or the other type of digital certificate) for electronic device 110-1. More generally, AAA server 130 may use information specified by the passphrase to determine whether electronic device 110-1 is authorized to access network 120 and/or network 122. In some embodiments, AAA server 130 implements or uses a RADIUS protocol.

Notably, AAA server 130 may perform brute-force calculations of outputs of the cryptographic calculation based at least in part on the inputs to the cryptographic calculation and different stored passphrases. When there is a match between one of these calculated outputs and the output received from electronic device 110-1, it may confirm that AAA server 130 is able to construct, derive or generate the same PTK as electronic device 110-1, so that electronic device 110-1 and access point 116-1 will be able to encrypt and decrypt their communication with each other.

Then, AAA server 130 may optionally access a policy associated with the individual (e.g., by performing a look up based at least in part on a username of the individual) that governs the access to WLAN (and, more generally, to network 120 and/or network 122). For example, the policy may include the policy may include a time interval when the passphrase is valid. Moreover, the policy may include a location where the passphrase is valid (such as a location of access point 116-1). In some embodiments, AAA server 130 may communicate with property management (PM) server 132, which is associated with an organization, to determine whether electronic device 110-1 is associated with the location (such as whether a user of electronic device 110-1 is checked into or associated with a room where access point 116-1 is located). Note that the location may include: a room, a building, a communication port, a facility associated with the organization (such as a hotel or an education institution), etc. More generally, AAA server 130 may optionally communicate with PM server 132 to determine whether one or more criteria associated with the policy are met

Then, when one or more criteria associated with the policy are met, AAA server 130 may selectively provide an access acceptance message to computer 112 (such as a RADIUS access acceptance message). This access acceptance message may be intended for electronic device 110-1 and may include information for establishing secure access of electronic device 110-1. For example, the access acceptance message may include: an identifier of electronic device 110-1, a tunnel type, a tunnel medium type, a tunnel privilege group identifier, a filter identifier, and the username.

In response, computer 112 may provide the access acceptance message (such as a RADIUS access acceptance message) to access point 116-1. Next, access point 116-1 may provide a third message in the four-way handshake to electronic device 110-1. Furthermore, electronic device 110-1 may provide a fourth message in the four-way handshake to access point 116-1, such as an acknowledgment. At this point, access point 116-1 may establish secure access to the WLAN for electronic device 110-1 (and, more generally, secure access to network 120 and/or network 122, such as an intranet or the Internet). Notably, the secure access may be in a PAN in the WLAN, which is independent of traffic associated with other PANs in the WLAN.

In some embodiments, the secure access may be implemented using a virtual network associated with the location (such as a virtual network for the PAN), and the information in the access acceptance message may allow electronic device 110-1 to establish secure communication with the virtual network. This secure communication may be independent of traffic associated with other users of the WLAN. For example, access point 116-1 may bridge traffic between electronic device 110-1 and another member of a group of electronic devices (such as electronic device 110-2) in the virtual network in the WLAN, where the traffic in the virtual network is independent of other traffic associated with one or more different virtual networks in the network. Note that the virtual network may include a VLAN. Alternatively, when the aforementioned operations of access point 116-1 are performed by switch 128, the virtual network may include a VXLAN. In these embodiments, switch 128 may bridge wired traffic (such as Ethernet frames) associated with electronic device 110-1 in virtual network.

Moreover, the virtual network may be specified by an identifier that is included in the access acceptance message. For example, the identifier may include a VLANID (for use with access point 116-1) or a VNI (for use with switch 128). Moreover, the identifier may include information that is capable of specifying more than 4,096 virtual networks. In some embodiments, the identifier may include 24 bits, which can be used to specify up to 16 million virtual networks.

In some embodiments, the virtual network is implemented in a virtual dataplane in access point 116-1 (such as using a generic routing encapsulation or GRE tunnel). Note that a dataplane is generally responsible for moving data around transmit paths, while a control plane is generally responsible for determining and setting up those transmit paths. The dataplane may be implemented using virtual machines that are executed by multiple cores in one or more processors (which is sometimes referred to as a 'virtual dataplane'), which allows the dataplane to be flexibly scaled and dynamically reconfigured. In the present discussion, a virtual machine is an operating system or application environment that is implemented using software that imitates or emulates dedicated hardware or particular functionality of the dedicated hardware.

Additionally, in some embodiments, the policy allows the individual to access multiple networks at different locations (such as different geographic locations, e.g., different hotels in a hotel brand or chain). In these embodiments, the inputs used to calculate the one or more second outputs of the cryptographic calculation may include a given identifier of a given network (such as a given SSID). Moreover, the one or more stored passphrases may be organized based at least in part on identifiers of different networks. In these embodiments, related stored passphrases may be grouped based at least in part on a given network that the individual is asking to join, which may reduce the computational time need by AAA server 130 to calculate the outputs for the different stored passphrases.

In these ways, the communication techniques may allow electronic devices (such as electronic device 110-1) to securely access a network based at least in part on a passphrase. Moreover, the communication techniques may make it easier to disseminate and manage passphrases. For example, using electronic device 104, a passphrase may be provided at a particular location (such as a hotel room) and a previous passphrase associated with the location may be optionally de-activated. Consequently, the communication techniques may make the onboarding simpler and less time-consuming, and may eliminate the need for a complicated enrollment process for electronic device 110-1 or cumbersome management of multiple passphrases. Therefore, the communication techniques may enhance the user experience when communicating when using electronic device 110-1, access point 116-1 and communicating via the network.

While the preceding discussion illustrated the communication techniques with communication between access point 116-1 (and, more generally, a computer network device) and AA server 130 mediated by computer 112, in other embodiments computer 112 may be excluded. Consequently, in some embodiments, access point 116-1 may communicate with AAA server 112 without computer 112. Moreover, while the preceding discussion illustrated the communication techniques with AAA server 112 communicating with PM server 132, in other embodiments information stored in PM server 132 is included in AAA server 130, so that PM server 132 may be excluded.

Furthermore, while the preceding discussion illustrated the communication techniques using a passphrase, more generally electronic device 104 may provide, in real time, information specifying a discardable credential that can be used to enable secure access to the network. Additionally, in some embodiments, the passphrase may be provided by PM server 132 instead of AAA server 130.

While the preceding embodiments illustrated electronic device 104 as having a physical user-interface device or a touch-sensitive display that can be used to provide an access request for a passphrase, in other embodiments electronic device 104 may not have or include the physical user-interface device or the touch-sensitive display. Instead, the passphrase and the identifier may be displayed on electronic device 104 when a new user is associated with the location, such as when a guest checks into a hotel room. Moreover, in order to prevent theft or misuse of electronic device 104, in some embodiments a serial number or identifier of electronic device 104 may tie or bind electronic device 104 to the location (or to access point 116-1), so that functionality of electronic device 104 is only enabled when electronic device 104 is located at or in proximity to the location.

In some embodiments, instead of using separate electronic device 104 to provide the information specifying the passphrase, the functionality of electronic device 104 may be implemented in a software application that is installed on and that executes on one of electronic devices 110 (such as electronic device 110-1).

We now describe embodiments of the method. FIG. 2 presents a flow diagram illustrating an example of a method 200 for selectively enabling secure access to a network, which may be performed by an electronic device, such as electronic device 104 in FIG. 1. During operation, the electronic device may receive an access request (operation 210). For example, the access request may correspond to activation of or a change in a state of: a physical user-interface device in the electronic device; or a virtual icon displayed in a user interface on the display.

In response to receiving the access request, the electronic device may display, on a display, information (operation 212) that specifies an identifier of the network and a passphrase associated with a location of the electronic device, where the passphrase enables secure access to the network that is proximate to the location. For example, the information may include a 2D QR code, a barcode, a matrix barcode or another type of graphical pattern. Moreover, the location may be associated with: a room, a building, a communication port, a facility associated with the organization (such as a hotel or an education institution), etc. In some embodiments, the information is displayed until a subsequent access request is received. Note that the passphrase may include a DPSK. Moreover, the network may include a WLAN and the identifier may include an SSID of the network.

In some embodiments, the electronic device optionally performs one or more additional operations (operation 214). For example, in response to the access request, the electronic device may select the passphrase from a set of predetermined passphrases. Thus, the electronic device may be preconfigured with the passphrase. Moreover, after selecting the passphrase, the electronic device may provide, to the second electronic device, an indication that the passphrase has been activated or is in use.

Alternatively, in response to the access request, the electronic device may: provide a request, to the second electronic device, for the passphrase, where the request includes access credentials for the network; and receive, from the second electronic device, the passphrase. For example, the request may include a RADIUS access request, and the response may include a RADIUS access acceptance message. Note that the passphrase may be received via a pre-existing secure connection between the electronic device and the second electronic device. In some embodiments, the electronic device receives, associated with the second electronic device, the identifier.

Additionally, after the access request is received, the electronic device may de-activate a previous passphrase associated with the location. For example, the electronic device may provide, to the second electronic device, an instruction to de-activate the previous passphrase. The previous passphrase may be de-activated when the electronic device receives an access code, such as a PIN code (which may be provided by housekeeping when a hotel room is cleaned). Alternatively, the previous passphrase may expire after a time interval has elapsed. This may not require communication between the electronic device and the second electronic device. Instead, in these embodiments, when a third electronic device uses the passphrase to establish secure communication with the second electronic device and/or the network, the previous passphrase may be de-activated or may expire after the time interval subsequently elapses.

In some embodiments of method 200, there may be additional or fewer operations. Furthermore, the order of the operations may be changed, and/or two or more operations may be combined into a single operation. For example, in order to prevent misuse of the electronic device, repeated access requests with a time interval (such as an hour, a day, a duration of a hotel stay, etc.) may be ignored, so that information specifying a second passphrase may not be displayed when a second access request is received with the time interval following the receipt of the access request. Alternatively, a second access request may be ignored until an access code is provided to the electronic device (i.e., the passphrase may not have a predefined active time), such as by housekeeping when a hotel room is cleaned.

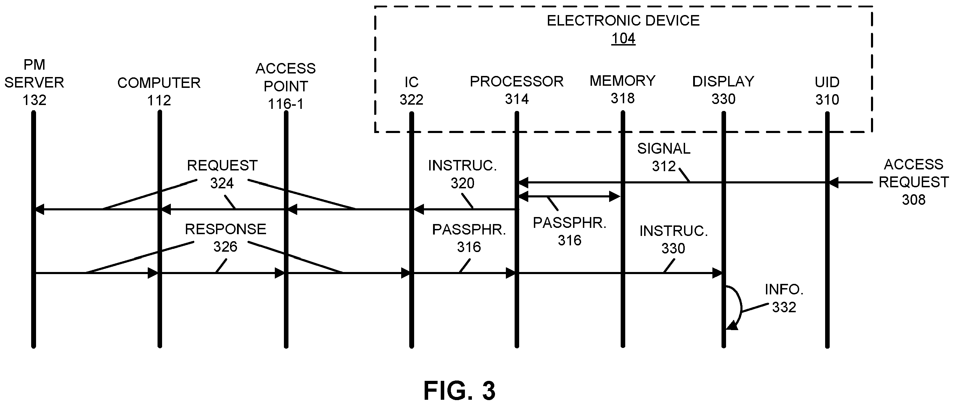

Embodiments of the communication techniques are further illustrated in FIG. 3, which presents a drawing illustrating an example of communication among electronic device 104, access point 116-1, computer 112, and AAA server 130. In FIG. 3, an individual may provide an access request 308, e.g., by pressing a button in a physical user-interface device (UID) 310 in electronic device 104. Then, this user-interface device may provide a signal 312 corresponding to access request 310 to processor 314 in electronic device 104.

In response, processor 314 may select a passphrase 316 by accessing stored passphrases in memory 318 in electronic device 104. Alternatively, processor 314 may instruct 320 interface circuit (IC) 322 in electronic device 104 to provide a request 324 for passphrase 316. This request may be conveyed to AAA server 130 by access point 116-1 and computer 112. Moreover, AAA server 130 may provide a response 326 with passphrase 316 to electronic device 104. After receiving response 326, interface circuit 322 may provide passphrase 316 to processor 314.

Next, processor 314 may instruct 328 a display 330 in electronic device 104 to display information 332 that specifies passphrase 316. For example, information 332 may include a QR code. In some embodiments, information 332 may include an identifier of a network, such as an SSID for a WLAN.

While FIG. 3 illustrates communication between components using unidirectional or bidirectional communication with lines having single arrows or double arrows, in general the communication in a given operation in this figure may involve unidirectional or bidirectional communication. Moreover, while FIG. 3 illustrates operations being performed sequentially or at different times, in other embodiments at least some of these operations may, at least in part, be performed concurrently or in parallel.

In some embodiments, the communication techniques may enable secure access to a network. Notably, demand for private networks (e.g., in a hotel, a school, a long-term stay environment, etc.) is increasing. Moreover, many users want a home-like experience when accessing a private network. For example, a user would like to access the private network using a password. In principle, this capability may be provided using a passphrase, such as a DPSK. However, in practice, it is often difficult to communicate the passphrase, and to manage the passphrase (e.g., to de-activate it when the user is no longer allowed to access the private network, such as when they check out of a hotel).

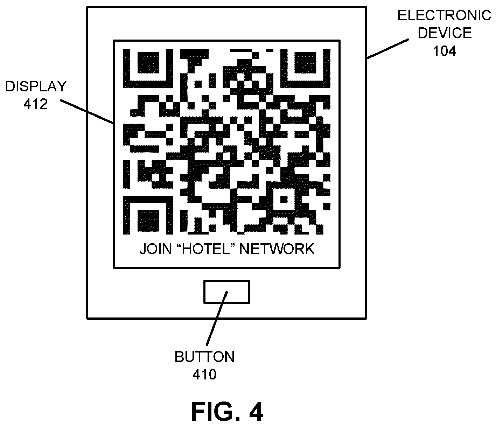

These problems may be addressed using an electronic device that provides a simple, low-cost solution for distributing passphrases. This is shown in FIG. 4, which presents a drawing illustrating an example of electronic device 104 for selectively enabling secure access with a network. Electronic device 104 may include a physical button 410 and a display 412. When button 410 is activated, display 412 may display information that enables secure access to the network, such as text (e.g., alphanumerical characters) and/or a QR code corresponding to a passphrase and an identifier of the network.

Note that display 412 may include one of a wide variety of types of displays, including a low-power-consumption display, such as an electronic-paper display or a microencapsulated electrophoretic display. Moreover, electronic device 104 may be powered using a battery or via a wired connection with an access point (e.g., with a universal serial bus or USB port in access point 116-1 in FIG. 1).

In some embodiments, electronic device 104 may have fewer or additional components (such as one or more additional buttons), a different component, a position of a component may be changed, or two or more components may be combined into a single component.

We now describe embodiments of an electronic device, which may perform at least some of the operations in the communication techniques. FIG. 5 presents a block diagram illustrating an example of an electronic device 500 in accordance with some embodiments, such as one of: electronic device 104, base station 108, one of electronic devices 110, computer 112, one of access points 116, one of radio nodes 118, switch 128, or AAA server 130. This electronic device includes processing subsystem 510, memory subsystem 512, and networking subsystem 514. Processing subsystem 510 includes one or more devices configured to perform computational operations. For example, processing subsystem 510 can include one or more microprocessors, graphics processing units (GPUs), ASICs, microcontrollers, programmable-logic devices, and/or one or more digital signal processors (DSPs).

Memory subsystem 512 includes one or more devices for storing data and/or instructions for processing subsystem 510 and networking subsystem 514. For example, memory subsystem 512 can include DRAM, static random access memory (SRAM), and/or other types of memory. In some embodiments, instructions for processing subsystem 510 in memory subsystem 512 include: one or more program modules or sets of instructions (such as program instructions 522 or operating system 524, such as Linux, UNIX, Windows Server, or another customized and proprietary operating system), which may be executed by processing subsystem 510. Note that the one or more computer programs, program modules or instructions may constitute a computer-program mechanism. Moreover, instructions in the various modules in memory subsystem 512 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 510.

In addition, memory subsystem 512 can include mechanisms for controlling access to the memory. In some embodiments, memory subsystem 512 includes a memory hierarchy that comprises one or more caches coupled to a memory in electronic device 500. In some of these embodiments, one or more of the caches is located in processing subsystem 510.

In some embodiments, memory subsystem 512 is coupled to one or more high-capacity mass-storage devices (not shown). For example, memory subsystem 512 can be coupled to a magnetic or optical drive, a solid-state drive, or another type of mass-storage device. In these embodiments, memory subsystem 512 can be used by electronic device 500 as fast-access storage for often-used data, while the mass-storage device is used to store less frequently used data.

Networking subsystem 514 includes one or more devices configured to couple to and communicate on a wired and/or wireless network (i.e., to perform network operations), including: control logic 516, an interface circuit 518 and one or more antennas 520 (or antenna elements). (While FIG. 5 includes one or more antennas 520, in some embodiments electronic device 500 includes one or more nodes, such as antenna nodes 508, e.g., a metal pad or a connector, which can be coupled to the one or more antennas 520, or nodes 506, which can be coupled to a wired or optical connection or link. Thus, electronic device 500 may or may not include the one or more antennas 520. Note that the one or more nodes 506 and/or antenna nodes 508 may constitute input(s) to and/or output(s) from electronic device 500.) For example, networking subsystem 514 can include a Bluetooth^{™} networking system, a cellular networking system (e.g., a 3G/4G/5G network such as UMTS, LTE, etc.), a USB networking system, a coaxial interface, a High-Definition Multimedia Interface (HDMI) interface, a networking system based on the standards described in IEEE 802.11 (e.g., a Wi-Fi^{®} networking system), an Ethernet networking system, and/or another networking system.

Note that a transmit or receive antenna pattern (or antenna radiation pattern) of electronic device 500 may be adapted or changed using pattern shapers (such as directors or reflectors) and/or one or more antennas 520 (or antenna elements), which can be independently and selectively electrically coupled to ground to steer the transmit antenna pattern in different directions. Thus, if one or more antennas 520 include N antenna pattern shapers, the one or more antennas may have 2^{N} different antenna pattern configurations. More generally, a given antenna pattern may include amplitudes and/or phases of signals that specify a direction of the main or primary lobe of the given antenna pattern, as well as so-called 'exclusion regions' or 'exclusion zones' (which are sometimes referred to as 'notches' or 'nulls'). Note that an exclusion zone of the given antenna pattern includes a low-intensity region of the given antenna pattern. While the intensity is not necessarily zero in the exclusion zone, it may be below a threshold, such as 3dB or lower than the peak gain of the given antenna pattern. Thus, the given antenna pattern may include a local maximum (e.g., a primary beam) that directs gain in the direction of electronic device 500 that is of interest, and one or more local minima that reduce gain in the direction of other electronic devices that are not of interest. In this way, the given antenna pattern may be selected so that communication that is undesirable (such as with the other electronic devices) is avoided to reduce or eliminate adverse effects, such as interference or crosstalk.

Networking subsystem 514 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a 'network interface' for the network system. Moreover, in some embodiments a 'network' or a 'connection' between the electronic devices does not yet exist. Therefore, electronic device 500 may use the mechanisms in networking subsystem 514 for performing simple wireless communication between the electronic devices, e.g., transmitting advertising or beacon frames and/or scanning for advertising frames transmitted by other electronic devices as described previously.

Within electronic device 500, processing subsystem 510, memory subsystem 512, and networking subsystem 514 are coupled together using bus 528. Bus 528 may include an electrical, optical, and/or electro-optical connection that the subsystems can use to communicate commands and data among one another. Although only one bus 528 is shown for clarity, different embodiments can include a different number or configuration of electrical, optical, and/or electro-optical connections among the subsystems.

In some embodiments, electronic device 500 includes a display subsystem 526 for displaying information on a display, which may include a display driver and the display, such as a liquid-crystal display, a multi-touch touchscreen, etc.

Moreover, electronic device 500 may include a user-interface subsystem 530, such as: a mouse, a keyboard, a trackpad, a stylus, a voice-recognition interface, and/or another human-machine interface. In some embodiments, user-interface subsystem 530 may include or may interact with a touch-sensitive display in display subsystem 526.

Electronic device 500 can be (or can be included in) any electronic device with at least one network interface. For example, electronic device 500 can be (or can be included in): a desktop computer, a laptop computer, a subnotebook/netbook, a server, a tablet computer, a cloud-based computing system, a smartphone, a cellular telephone, a smartwatch, a wearable electronic device, a consumer-electronic device, a portable computing device, an access point, a transceiver, a router, a switch, communication equipment, an eNodeB, a controller, test equipment, and/or another electronic device.

Although specific components are used to describe electronic device 500, in alternative embodiments, different components and/or subsystems may be present in electronic device 500. For example, electronic device 500 may include one or more additional processing subsystems, memory subsystems, networking subsystems, and/or display subsystems. Additionally, one or more of the subsystems may not be present in electronic device 500. Moreover, in some embodiments, electronic device 500 may include one or more additional subsystems that are not shown in FIG. 5. Also, although separate subsystems are shown in FIG. 5, in some embodiments some or all of a given subsystem or component can be integrated into one or more of the other subsystems or component(s) in electronic device 500. For example, in some embodiments instructions 522 is included in operating system 524 and/or control logic 516 is included in interface circuit 518.

Moreover, the circuits and components in electronic device 500 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit (which is sometimes referred to as a 'communication circuit') may implement some or all of the functionality of networking subsystem 514 and/or of electronic device 500. The integrated circuit may include hardware and/or software mechanisms that are used for transmitting wireless signals from electronic device 500 and receiving signals at electronic device 500 from other electronic devices. Aside from the mechanisms herein described, radios are generally known in the art and hence are not described in detail. In general, networking subsystem 514 and/or the integrated circuit can include any number of radios. Note that the radios in multiple-radio embodiments function in a similar way to the described single-radio embodiments.

In some embodiments, networking subsystem 514 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals)

In some embodiments, an output of a process for designing the integrated circuit, or a portion of the integrated circuit, which includes one or more of the circuits described herein may be a computer-readable medium such as, for example, a magnetic tape or an optical or magnetic disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII), Electronic Design Interchange Format (EDIF), OpenAccess (OA), or Open Artwork System Interchange Standard (OASIS). Those of skill in the art of integrated circuit design can develop such data structures from schematics of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used Wi-Fi, LTE and/or Ethernet communication protocols as illustrative examples, in other embodiments a wide variety of communication protocols and, more generally, communication techniques may be used. Thus, the communication techniques may be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the communication techniques may be implemented using program instructions 522, operating system 524 (such as a driver for interface circuit 518) or in firmware in interface circuit 518. Alternatively or additionally, at least some of the operations in the communication techniques may be implemented in a physical layer, such as hardware in interface circuit 518.

Note that the use of the phrases 'capable of,' 'capable to,' 'operable to,' or 'configured to' in one or more embodiments, refers to some apparatus, logic, hardware, and/or element designed in such a way to enable use of the apparatus, logic, hardware, and/or element in a specified manner.

While examples of numerical values are provided in the preceding discussion, in other embodiments different numerical values are used. Consequently, the numerical values provided are not intended to be limiting.

In the preceding description, we refer to 'some embodiments.' Note that 'some embodiments' describes a subset of all of the possible embodiments, but does not always specify the same subset of embodiments.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein may be applied to other embodiments and applications without departing from the spirit and scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

## Claims

1. An electronic device (104), comprising:
a display (330, 412, 526);
a processor (510) coupled to the display; and
memory (512), coupled to the processor, configured to store program instructions (522), wherein, when executed by the processor, the program instructions cause the electronic device to perform operations comprising:
receiving (210) an access request (308); and
in response to receiving access request, displaying (212), on the display, information (332) that specifies an identifier of a network and a passphrase (316) associated with a location of the electronic device, wherein the passphrase enables secure access to the network that is proximate to the location.

2. The electronic device of claim 1, wherein the passphrase comprises a dynamic pre-share key (DPSK).

3. The electronic device of claim 1 or 2, wherein the access request corresponds to activation of or a change in a state of: a physical user-interface device (310) in the electronic device; or a virtual icon displayed in a user interface on the display.

4. The electronic device of claim 1, 2 or 3, wherein the operations comprise, in response to the access request, selecting the passphrase from a set of predetermined passphrases.

5. The electronic device of claim 4, wherein the electronic device comprises an interface circuit (322) configured to communicates with a second electronic device (112, 116-1, 118-1, 128 or 130); and
wherein the operations comprise, after selecting the passphrase, providing, addressed to the second electronic device, an indication that the passphrase has been activated or is in use.

6. The electronic device of any preceding claim, wherein the electronic device comprises an interface circuit (322) configured to communicates with a second electronic device (112, 116-1, 118-1, 128 or 130); and
wherein the operations comprise, in response to the access request:
providing a request (324), addressed to the second electronic device, for the passphrase, wherein the request includes access credentials for the network; and
receiving, associated with the second electronic device, the passphrase.

7. The electronic device of claim 6, wherein the operations comprise receiving, associated with the second electronic device, the identifier.

8. The electronic device of any preceding claim, wherein the operations comprise, after the access request is received, de-activating a previous passphrase associated with the location.

9. The electronic device of claim 8, wherein the electronic device comprises an interface circuit (322) configured to communicates with a second electronic device (112, 116-1, 118-1, 128 or 130); and
wherein the de-activating comprises providing, addressed to the second electronic device, an instruction to de-activate the previous passphrase.

10. The electronic device of claim 8, wherein the previous passphrase is de-activated when the electronic device receives an access code.

11. The electronic device of any preceding claim, wherein the network comprises a wireless local area network (WLAN) and the identifier comprises a service set identifier (SSID) of the network.

12. The electronic device of any preceding claim, wherein the information comprises a two-dimensional (2D) quick response (QR) code, a barcode, a matrix barcode or another type of graphical pattern.

13. The electronic device of any preceding claim, wherein the passphrase is uniquely used by a second electronic device (112, 116-1, 118-1, 128 or 130) associated with an individual or a group of second electronic devices that are associated with at least the individual and that share the passphrase.

14. A non-transitory computer-readable storage medium (512) for use in conjunction with an electronic device (104), the computer-readable storage medium storing program instructions (522) that, when executed by the electronic device, cause the electronic device to perform operations comprising:
receiving (210) an access request (308); and
in response to receiving access request, displaying (212), on a display (330, 412, 526), information (332) that specifies an identifier of a network and a passphrase (316) associated with a location of the electronic device, wherein the passphrase enables secure access to the network that is proximate to the location.

15. A method (200) for selectively enabling secure access to a network, comprising:
by an electronic device (104):
receiving (210) an access request (308); and
in response to receiving access request, displaying (212), on a display (330, 412, 526), information (332) that specifies an identifier of the network and a passphrase (316) associated with a location of the electronic device, wherein the passphrase enables secure access to the network that is proximate to the location.
